# EUROPÄISCHE PATENTSCHRIFT

(11) **EP 2 268 533 B1**
(45) Veröffentlichungstag und Bekanntmachung des Hinweises auf die Patenterteilung: **03.07.2013**
(21) Anmeldenummer: 09737812.9
(22) Anmeldetag: 15.04.2009
(51) Int. Cl.: B62J 11/00, B62J 1/12, B62K 19/46

(54) **ZWEIRAD, INSBESONDERE MOTORROLLER BZW. MOTORRAD**
TWO-WHEELER IN PARTICULAR A SCOOTER OR MOTORBIKE
DEUX-ROUES, EN PARTICULIER SCOOTER OU MOTO

(30) Priorität: 02.05.2008 DE 102008021981
(43) Veröffentlichungstag der Anmeldung: 05.01.2011
(73) Patentinhaber: Bayerische Motoren Werke Aktiengesellschaft, 80809 München (DE)
(72) Erfinder: PUEFFEL, Peter, 85354 Freising (DE); LOTTI, Massimo, 47900 Rimini (IT)
(86) Internationale Anmeldenummer: PCT/EP2009/002738
(87) Internationale Veröffentlichungsnummer: WO 2009/132768

(56) Entgegenhaltungen:
- EP-A- 1 557 348
- EP-A- 1 759 974
- DE-A1- 3 047 985
- JP-A- 1 136 884
- JP-A- 2004 099 008
- US-A- 5 107 949

## Beschreibung

Die vorliegende Erfindung betrifft ein Zweirad gemäß dem Oberbegriff des Patentanspruches 1.

Ein derartiges Zweirad ist aus der JP 1136884 bekannt. Zum relevanten Stand der Technik gehören ferner die JP 2004 099 008 A, EP-A 1 557 348, EP-A 1 759 974, DE 30 47 985 A1 sowie die US-A 5 107 949.

Aus der DE 10 2004 048 481 A1 ist ein Motorroller mit einer relativ steil nach hinten ansteigenden Sitzbank bekannt. Der Sozius sitzt somit deutlich höher als der Fahrer. Unterhalb der Sitzbank befindet sich ein Stauraum, in dessen vorderen Bereich, etwa unterhalb der Sitzposition des Fahrers, ein erster Helm und in dessen hinteren Bereich, etwa unterhalb der Sitzposition des Sozius, ein zweiter Helm untergebracht werden kann. Die Unterbringung des zweiten Helms ist möglich, da die Sitzbank, wie bereits erwähnt, relativ steil nach hinten ansteigt und somit zwischen dem Hinterrad und der Sitzbank ein hinreichend großer Freiraum vorhanden ist.

Eine derart steil nach hinten ansteigende Sitzbank ist aus Designgründen nicht immer erwünscht.

Aufgabe der Erfindung ist es, ein Zweirad zu schaffen, das eine vergleichsweise flach ansteigende Sitzbank und dennoch einen hinreichenden Stauraum unterhalb der Sitzbank aufweist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist ein Zweirad, insbesondere ein Motorroller bzw. Scooter bzw. ein Motorrad, mit einem Hinterrad und einer Sitzbank, die sich bis über den Bereich des Hinterrads erstreckt. Unterhalb der Sitzbank ist ein Staufach vorgesehen, das mindestens ein "Bodenelement" aufweist. Der Begriff "Bodenelement" ist ganz allgemein zu verstehen. Gemeint ist, dass das "Bodenelement" das Staufach oder einen Teilbereich des Staufachs nach unten in Richtung des Hinterrads begrenzt.

Die Grundidee der Erfindung besteht in einem Staufach mit variablem Stauvolumen, wobei die Variabilität dadurch erreicht wird, dass das Bodenelement zwischen einer ersten, oberen Stellung und mindestens einer zweiten, unteren Stellung, in der das Staufach ein größeres Stauvolumen als in der ersten Stellung des Bodenelements aufweist, verstellt werden kann.

Vorzugsweise weist das Staufach in der zweiten, unteren Stellung des Bodenelements ein hinreichendes Stauvolumen für die Unterbringung eines Motorradhelms auf.

Nach der Erfindung ist das Bodenelement in seiner zweiten, unteren Stellung bis in den "Federweg" bzw. "Federbereich" des Hinterrads hinein ausgefahren. Die Nutzung des größeren Stauvolumens, bei dem sich das Bodenelement in seiner unteren, ausgefahrenen Stellung befindet, ist somit primär oder ausschließlich für Zustände vorgesehen, in denen das Motorrad abgestellt ist. Grundsätzlich kann das Bodenelement in seiner zweiten, unteren Stellung so weit ausgefahren werden, dass es mit seiner Unterseite auf einer Oberseite des Hinterradreifens aufliegt, wodurch sich das Stauvolumen des Staufachs maximieren lässt.

Unter dem Begriff "Verfahren" bzw. "Ausfahren" oder "Einfahren des Bodenelements" ist ganz allgemein zu verstehen,dass das Bodenelement von der einen Stellung in seine andere Stellung oder umgekehrt bewegt wird. Beispielsweise kann vorgesehen sein, dass das Bodenelement schwenkbar angeordnet ist und zwischen den mindestens zwei Stellungen hin- und her schwenkbar ist. Das Bodenelement kann z.B. um eine Querachse des Zweirads schwenkbar am Zweirad, insbesondere an einem Rahmen des Zweirads angeordnet sein. Alternativ dazu kann vorgesehen sein, dass das Bodenelement zwischen den beiden Stellungen im Wesentlichen translatorisch verschiebbar ist.

Bei dem Bodenelement kann es sich beispielsweise um ein im Wesentlichen starres Teil, z. B. aus Kunststoff handeln. Das Bodenelement kann insbesondere als wannenartiges Teil ausgebildet sein. Denkbar ist auch, dass der "Boden" des Staufachs durch mehrere gelenkig miteinander verbundene Bodenelemente gebildet ist.

Wie bereits erwähnt kann vorgesehen sein, dass die Nutzung des größeren Stauvolumens, bei dem das Bodenelement in seine zweite, untere Stellung ausgefahren ist, primär oder ausschließlich bei stehendem Fahrzeug vorgesehen ist. Um zu verhindern, dass bei nach unten ausgefahrenem Bodenelement angefahren wird, kann ein Sensor vorgesehen sein, der detektiert, ob sich das Bodenelement in seiner unteren, zweiten Stellung befindet. Bei dem Sensor kann es sich beispielsweise um einen Hallsensor handeln.

Liegt ein entsprechendes Sensorsignal, das anzeigt, dass das Bodenelement nach unten ausgefahren ist, vor, so kann vorgesehen sein, dass eine Motorelektronik des Zweirads ein Starten des Motors des Zweirads verhindert.

Alternativ oder ergänzend dazu kann vorgesehen sein, dass, wenn das Bodenelement nach unten ausgefahren ist bzw. wird, die Zweifahrzeugelektronik verhindert, dass ein Gang des Getriebes eingelegt wird.

Nach einer Weiterbildung der Erfindung ist vorgesehen, dass das Bodenelement in seiner zweiten, nach unten ausgefahrenen Stellung arretiert werden kann. Durch eine Arretierung des Bodenelements in seiner unteren Stellung kann eine Beschädigung von in das Staufach eingebrachten Gegenständen verhindert werden. Bei abgestelltem Motorrad besteht nämlich die Gefahr, dass sich eine Person auf das Motorrad setzt, was zum Einfedern des Hinterrad führen würde. Bei maximal ausgefahrenem Staufach, d. h. wenn das Bodenelement auf dem Hinterradreifen aufliegt, bestünde somit die Gefahr, dass durch das Einfedern des Hinterrads im Staufach befindliche Gegenstände zusammengedrückt bzw. beschädigt würden. Ist das Bodenelement in seiner unteren Stellung arretierbar, so wird ein Einfedern des Hinterrads und somit eine Beschädigung von im Staufach befindlichen Gegenständen verhindert.

Es kann vorgesehen sein, dass das Bodenelement manuell betätigbar ist. Beispielsweise kann das Bodenelement mittels eines einfachen Hebelmechanismus o. ä. mit wenigen Handgriffen von seiner oberen in seine untere Stellung, und umgekehrt, gebracht werden. Alternativ dazu kann vorgesehen sein; dass das Bodenelement mittels eines elektrischen, hydraulischen oder pneumatischen Aktors oder in anderer Weise "gesteuert" von seiner ersten Stellung in seine zweite Stellung und/oder umgekehrt bewegt werden kann.

Ähnlich wie bei herkömmlichen Motorrädern bzw. Motorrollern kann vorgesehen sein, dass das Staufach "von oben her" durch Abnehmen oder Verschwenken der Sitzbank zugänglich ist.

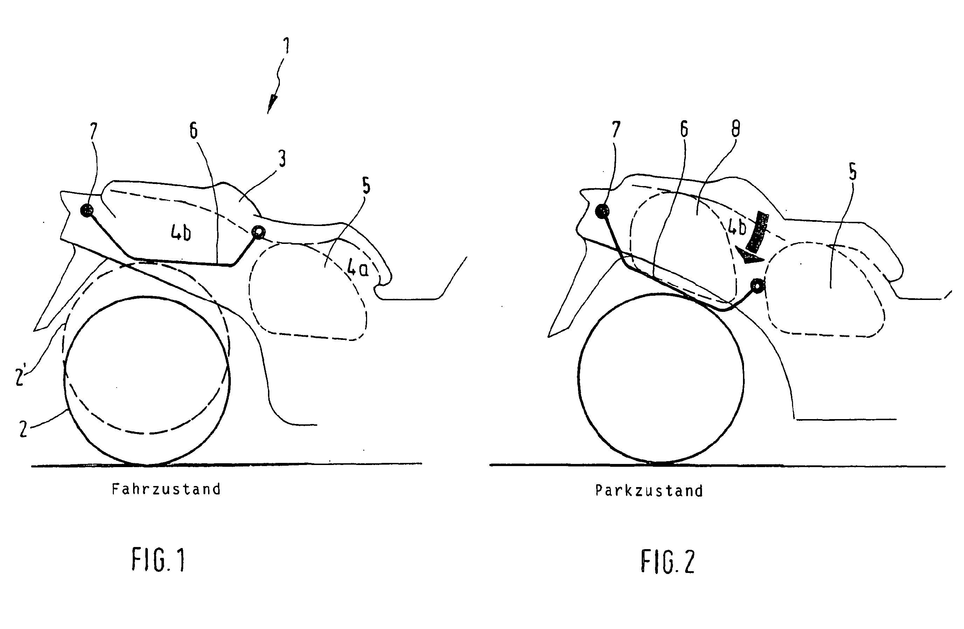

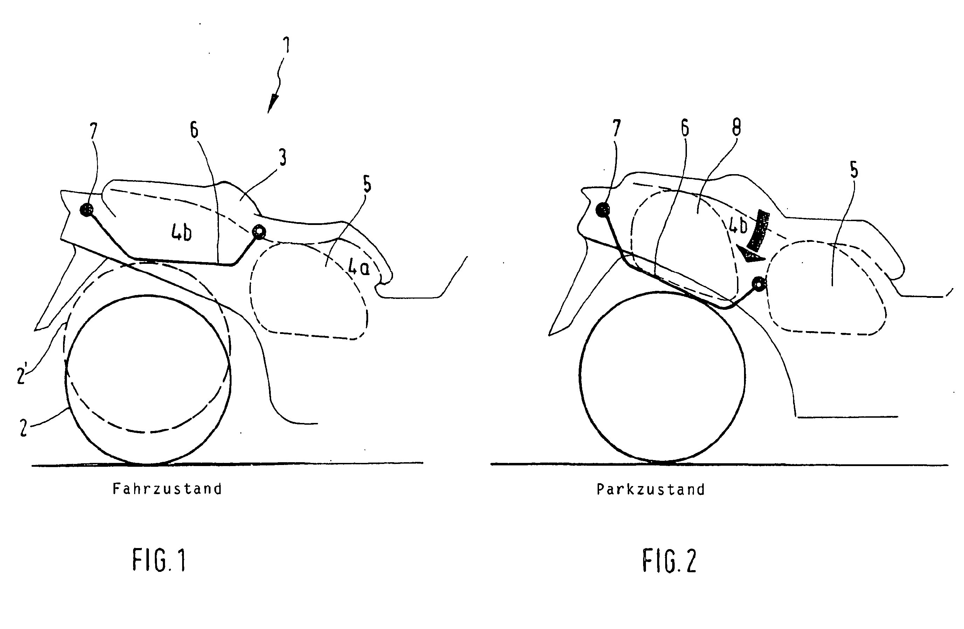

Figur 1 zeigt den Heckbereich eines Motorrollers bzw. Scooters 1. Der Motorroller 1 weist ein Hinterrad 2 auf. Der mögliche "Einfederweg" bzw. "Einfederbereich" des Hinterrads 2 ist durch die gestrichelte Darstellung des Hinterrads 2 angedeutet.

Der Motorroller 1 weist eine Sitzbank 3 auf, die abnehmbar oder nach oben verschwenkbar angeordnet sein kann. Unterhalb der Sitzbank 3 ist ein Staufach 4 mit einem vorderen Bereich 4a und einem hinteren Bereich 4b angeordnet. In dem vorderen Bereich 4a des Staufachs ist ein Helm 5 untergebracht. Der hintere Bereich 4b de Staufachs ist nach unten, d.h. zum Hinterrad 2 hin durch ein wannenartiges Bodenelement 6 begrenzt. Das Bodenelement 6 ist schwenkbar um eine Querachse 7 des Motorrollers 1 angeordnet.

In der in Figur 1 gezeigten Position befindet sich das Bodenelement 6 in seiner ersten, nach oben verschwenkten Stellung, in der das Hinterrad 2 das Bodenelement 6 selbst bei maximaler Einfederung gerade nicht berührt. In der nach oben verschwenkten Stellung weist der hintere Staufachbereich 4b ein vergleichsweise geringes Stauvolumen auf.

Zur Maximierung des Stauvolumens des hinteren Staufachbereichs 4b kann das Bodenelement 6 bei abgestelltem Motorroller um seine Schwenkachse 7 nach unten verschwenkt werden, so dass eine Unterseite des Bodenelements 6 auf einer Oberseite des Hinterradreifens aufliegt In der nach unten geschwenkten Stellung des Bodenelements 6 weist der hintere Staufachbereich 4b ein hinreichend großes Volumen auf, so dass bei abgestelltem Motorrad ein zweiter Helm 8 verstaut werden kann.

In den Figuren 1 und 2 nicht näher dargestellt ist eine Sensorik, die detektiert, ob das Bodenelement 6 nach unten ausgefahren ist oder nicht. Bei nach unten ausgefahrenem Bodenelement 6 kann vorgesehen sein, dass die Fahrzeugelektronik ein Starten des Motors und somit ein Wegfahren verhindert. Alternativ oder zusätzlich dazu kann vorgesehen sein, dass die Fahrzeugelektronik bei nach unten ausgefahrenem Bodenelement 6 ein Einlegen eines Getriebegangs verhindert.

## Patentansprüche

1. Zweirad, insbesondere Motorroller bzw. Motorrad, mit
- einem Hinterrad (2),
- einer Sitzbank (3), die sich bis über den Bereich des Hinterrads (2) erstreckt, und
- einem Staufach (4a, 4b), das unterhalb der Sitzbank (3) angeordnet ist, wobei das Staufach (4a, 4b) mindestens ein Bodenelement (6) aufweist, das eine erste, obere Stellung, in der das Staufach (4a, 4b) ein erstes Stauvolumen aufweist, und mindestens eine zweite, untere Stellung einnehmen kann, in der das Staufach (4a, 4b) ein zweites, größeres Stauvolumen aufweist,
**dadurch gekennzeichnet, dass**
das Hinterrad (2) innerhalb eines vorgegebenen Federwegs relativ zu einem Rahmen des Zweirads ein- oder ausfedern kann und dass sich das Bodenelement (6) in seiner zweiten Stellung innerhalb des Federwegs des Hinterrads (2) befindet.

2. Zweirad nach Anspruch 1, **dadurch gekennzeichnet, dass** das Staufach (4a, 4b) einen vorderen Bereich (4a) aufweist, der hinreichend groß ist, so dass darin ein erster Motorradhelm verstaut werden kann.

3. Zweirad nach Anspruch 1 oder 2, **dadurch gekennzeichnet, dass** das Staufach (4a, 4b) hinter dem ersten Bereich (4a) einen zweiten Bereich (4b) aufweist, dessen Boden durch das Bodenelement (6) gebildet ist und dass in dem zweiten Bereich (4b) ein zweiter Motorradhelm (8) verstaut werden kann, wenn sich das Bodenelement (6) in seiner zweiten Stellung befindet.

4. Zweirad nach einem der Ansprüche 1 bis 3, **dadurch gekennzeichnet, dass** eine Unterseite des Bodenelements (6) in der zweiten Stellung des Bodenelements (6) auf einer Oberseite eines Reifens des Hinterrads aufliegt.

5. Zweirad nach einem der Ansprüche 1 bis 4, **dadurch gekennzeichnet, dass** das Bodenelement zwischen den mindestens zwei Stellungen hin- und her verschwenkt werden kann.

6. Zweirad nach Anspruch 5, **dadurch gekennzeichnet, dass** das Bodenelement (6) um eine Querachse (7) des Zweirads schwenkbar am Zweirad, insbesondere am Rahmen des Zweirads angeordnet ist.

7. Zweirad nach einem der Ansprüche 1 bis 4, **dadurch gekennzeichnet, dass** das Bodenelement (6) verschiebbar angeordnet ist und zwischen den beiden Stellungen hin- und her verschoben werden kann.

8. Zweirad nach einem der Ansprüche 1 bis 7, **dadurch gekennzeichnet, dass** das Bodenelement (6) ein im Wesentlichen steifes, hartschaliges Teil ist.

9. Zweirad nach einem der Ansprüche 1 bis 8, **dadurch gekennzeichnet, dass** ein Sensor vorgesehen ist, der detektiert, ob sich das Bodenelement (6) in der zweiten Stellung befindet.

10. Zweirad nach Anspruch 9, **dadurch gekennzeichnet, dass** der Sensor ein Hallsensor ist.

11. Zweirad nach einem der Ansprüche 9 oder 10, **dadurch gekennzeichnet, dass** der Sensor an eine Fahrzeugelektronik angeschlossen ist, wobei die Fahrzeugelektronik ein Starten eines Motors des Zweirads verhindert, wenn ein Signal des Sensors vorliegt, das anzeigt, dass sich das Bodenelement (6) in der zweiten Stellung befindet.

12. Zweirad nach einem der Ansprüche 9 bis 11, **dadurch gekennzeichnet, dass** die Fahrzeugelektronik ein Einlegen eines Getriebegangs verhindert, wenn ein Signal des Sensors vorliegt, das anzeigt, dass sich das Bodenelement (6) in seiner zweiten Stellung befindet.

13. Zweirad nach einem der Ansprüche 1 bis 12, **dadurch gekennzeichnet, dass** das Bodenelement (6) in seiner zweiten Stellung arretierbar ist.

14. Zweirad nach einem der Ansprüche 1 bis 13, **dadurch gekennzeichnet, dass** Bodenelement (6) manuell von seiner ersten Stellung in seine zweite Stellung bzw. umgekehrt gebracht werden kann.

15. Zweirad nach einem der Ansprüche 1 bis 14, **dadurch gekennzeichnet, dass** ein elektrischer Aktor vorgesehen ist, mittels dem das Bodenelement (6) von seiner ersten Stellung in seine zweite Stellung bzw. umgekehrt gebracht werden kann.

## Claims

1. A two-wheeled vehicle, especially a motor scooter or motorcycle, comprising
- a rear wheel (2)
- a seat bench (3) extending over the rear wheel (2), and
- a storage compartment (4a, 4b) disposed under the seat bench (3), wherein the storage compartment (4a, 4b) has at least one bottom element (6) with a first top position in which the compartment (4a, 4b) has a first storage volume and at least one second bottom position in which the compartment (4a, 4b) has a second larger storage volume,
**characterised in that**
the rear wheel (2), within a set range of spring travel, can expand or contract relative to the vehicle frame and the bottom element (6), in its second position, is inside the spring travel of the rear wheel (2).

2. A vehicle according to claim 1, **characterised in that** the storage compartment (4a, 4b) has a front region (4a) sufficiently large to hold a first motorcyclist's helmet.

3. A vehicle according to claim 1 or claim 2, **characterised in that** behind the first region (4a), the storage compartment (4a, 4b) has a second region (4b), the bottom of which is formed by the bottom element (6), and in the second region (4b) a second motorcyclist's helmet (8) can be stored when the bottom element (6) is in its second position.

4. A vehicle according to any of claims 1 to 3, **characterised in that** when the bottom element (6) is in its second position, an underside of the bottom element (6) rests on the top of a rear-wheel tyre.

5. A vehicle according to any of claims 1 to 4, **characterised in that** the bottom element can be pivoted backwards and forwards between the at least two positions.

6. A vehicle according to claim 5, **characterised in that** the bottom element (6) is pivotable around a transverse axis (7) of the vehicle and is disposed on the vehicle, especially on the frame thereof.

7. A vehicle according to any of claims 1 to 4, **characterised in that** the bottom element (6) is movable and can be moved between the two positions.

8. A vehicle according to any of claims 1 to 7, **characterised in that** the bottom element (6) is a substantially stiff, hard-shell part.

9. A vehicle according to any of claims 1 to 8, **characterised in that** a sensor is provided and detects whether the bottom element (6) is in the second position.

10. A vehicle according to claim 9, **characterised in that** the sensor is a Hall Effect sensor.

11. A vehicle according to claim 9 or claim 10, **characterised in that** the sensor is connected to an electronic unit on the vehicle, wherein the unit prevents the engine starting if a signal from the sensor indicates that the bottom element (6) is in the second position.

12. A vehicle according to any of claims 9 to 11, **characterised in that** the unit prevents a gear engaging if a signal from the sensor indicates that the bottom element (6) is in its second position.

13. A vehicle according to any of claims 1 to 12, **characterised in that** the bottom element (6) is lockable in its second position.

14. A vehicle according to any of claims 1 to 13, **characterised in that** the bottom element (6) can be manually moved from its first position into its second position or vice versa.

15. A vehicle according to any of claims 1 to 14, **characterised in that** an electric actuator is provided for moving the bottom element (6) from its first position into its second position or back.

## Revendications

1. Deux-roues, en particulier scooter ou moto, comportant :
- une roue arrière (2),
- une banquette (3) s'étendant au-dessus de la zone de la roue arrière (2),
- un compartiment (4a, 4b) sous la banquette (3),
*le compartiment (4a, 4b) ayant au moins un élément de fond (6) avec une première position haute pour laquelle le compartiment (4a, 4b) a un premier volume et au moins une seconde position basse dans laquelle le compartiment (4a, 4b) a un second volume plus grand,
**caractérisé en ce que**
la roue arrière (2) peut monter et descendre selon une course de ressort prédéfinie par rapport au cadre du deux-roues et dans sa seconde position, l'élément de fond (6) se trouve dans la course de suspension de la roue arrière (2).

2. Deux-roues selon la revendication 1,
**caractérisé en ce que**
le compartiment (4a, 4b) a une zone avant (4a) suffisamment grande pour recevoir un premier casque de moto.

3. Deux-roues selon la revendication 1 ou 2,
**caractérisé en ce que**
le compartiment (4a, 4b) présente derrière la première zone (4a) une seconde zone (4b) dont le fond est constitué par l'élément de fond (6) et cette seconde zone (4b) peut recevoir un second casque de moto (8) lorsque l'élément de fond (6) se trouve dans sa seconde position.

4. Deux-roues selon l'une des revendications 1 à 3,
**caractérisé en ce que**
le côté inférieur de l'élément de fond (6) occupant sa seconde position s'appuie sur le côté supérieur du pneu de la roue arrière.

5. Deux-roues selon l'une des revendications 1 à 4,
**caractérisé en ce que**
l'élément de fond (1) peut être basculé entre au moins deux positions.

6. Deux-roues selon la revendication 5,
**caractérisé en ce que**
l'élément de fond (6) est monté basculant sur le deux-roues, notamment sur le cadre du deux-roues autour d'un axe transversal (7) du deux-roues.

7. Deux-roues selon l'une des revendications 1 à 4,
**caractérisé en ce que**
l'élément de fond (6) est monté coulissant et peut coulisser entre les deux positions.

8. Deux-roues selon l'une des revendications 1 à 7,
**caractérisé en ce que**
l'élément de fond (6) est une pièce essentiellement rigide formée d'une coque dure.

9. Deux-roues selon l'une des revendications 1 à 8,
**caractérisé par**
un capteur détectant si l'élément de fond (6) occupe sa seconde position.

10. Deux-roues selon la revendication 9,
**caractérisé en ce que**
le capteur est un capteur Hall.

11. Deux-roues selon l'une des revendications 9 ou 10,
**caractérisé en ce que**
le capteur est relié à une électronique du véhicule qui interdit le démarrage du moteur du deux-roues si le capteur donne un signal indiquant que l'élément de fond (6) est dans sa seconde position.

12. Deux-roues selon l'une des revendications 9 à 11,
**caractérisé en ce que**
l'électronique du véhicule interdit le passage d'un rapport de vitesse en cas de signal du capteur indiquant que l'élément de fond (6) occupe sa seconde position.

13. Deux-roues selon l'une des revendications 1 à 12,
**caractérisé en ce que**
l'élément de fond (6) se bloque dans sa seconde position.

14. Deux-roues selon l'une des revendications 1 à 13,
**caractérisé en ce que**
l'élément de fond (6) peut être mis manuellement de sa première position dans sa seconde position et inversement.

15. Deux-roues selon l'une des revendications 1 à 14,
**caractérisé par**
un actionneur électrique à l'aide duquel l'élément de fond (6) peut être mis de sa première position dans sa seconde position et inversement.
